# EUROPÄISCHE PATENTSCHRIFT

(11) **EP 0 561 736 B1**
(45) Veröffentlichungstag und Bekanntmachung des Hinweises auf die Patenterteilung: **23.04.1997**
(21) Anmeldenummer: 93810119.3
(22) Anmeldetag: 23.02.1993
(51) Int. Cl.: B65H 29/00

(54) **Verfahren und Vorrichtung zum Auf- und Abwinkeln von Druckprodukten in Schuppenformation**
Method and device for winding and unwinding printed products in an imbricated formation
Procédé et dispositif pour enrouler et dérouler des produits imprimés en formation imbriquée

(30) Priorität: 19.03.1992 CH 888/92
(43) Veröffentlichungstag der Anmeldung: 22.09.1993
(73) Patentinhaber: Ferag AG, CH-8340 Hinwil (CH)
(72) Erfinder: Stauber, Hans-Ulrich, CH-8624 Grüt (CH)
(74) Vertreter: Frei, Alexandra Sarah

(56) Entgegenhaltungen:
- EP-A- 0 474 999
- GB-A- 2 126 188

## Beschreibung

Die Erfindung liegt auf dem Gebiete der Weiterverarbeitung von Druckprodukten und betrifft ein Verfahren und eine Vorrichtung gemäss dem Oberbegriff der entsprechenden unabhängigen Patentansprüche. Mit dem erfindungsgemässen Verfahren und der erfindungsgemässen Vorrichtung werden Druckprodukte in Schuppenformation auf- und abgewickelt, wobei Druckproduktewickel erstellt werden, die ohne Gefahr einer Beschädigung der Druckprodukte einfach gehandhabt, transportiert und gelagert werden können.

Gemäss dem Stande der Technik werden Druckprodukte und auch andere flächige Gegenstände, die aus einer Produktion oder Weiterverarbeitung, beispielsweise ab einer Rotationspresse, in Form eines Schuppenstromes anfallen, zur Zwischenlagerung oder Produktionspufferung zu Wickeln aufgewickelt. Dies wird beispielsweise gemäss den europäischen Publikationen EP-0477498, EP-0447903 und EP-0391453 derselben Anmelderin auf Wickelstationen durchgeführt, indem der Schuppenstrom mit Hilfe eines Wickelbandes auf einen Wickelkern aufgewickelt wird. Das eine Ende des Wickelbandes ist mit dem Wickelkern fest verbunden und das Band ist auf den leeren Kern aufgerollt. Zum Aufwickeln wird ein leerer Kern mit Wickelband auf einer zum Aufwickeln konfigurierten Wickelstation aufgesetzt und das Wickelband wird vom Kern auf eine Zwischenrolle aufgespult. Der Schuppenstrom wird dann mit dem Wickelband auf den Kern aufgewickelt. Das Wickelband hält die Druckprodukte mittig auf dem Wickel fest und hat üblicherweise eine bedeutend kleinere Breite als die Druckprodukte. Ein derart erstellter Druckproduktewickel wird dann von der Wickelstation abgenommen, wegtransportiert und zwischengelagert. Wenn die Druckprodukte zur Weiterverarbeitung wieder gebraucht werden, werden die Wickel vom Lagerplatz geholt, auf Wickelstationen, die zum Abwickeln konfiguriert sind, aufgesetzt und abgewickelt. Beim Abwickeln wird das Wickelband wieder auf die Zwischenrolle abgespult und, wenn alle Druckprodukte abgewickelt sind, auf den leeren Kern zurück gewickelt.

Es zeigt sich nun, dass speziell bei Druckprodukten, die aus weichem Papier bestehen und relativ viele Seiten umfassen, das Wickelband die Produkte mittig stark gegen den Kern schnürt und die äusseren Partien vor allem die auf der Aussenseite des Wickels liegenden Ecken ohne viel Stabilität von der Wickeloberfläche abstehen und beim Handhaben, Transportieren und Lagern leicht deformiert oder beschädigt werden. Diesem Nachteil des Druckproduktewickels kann abgeholfen werden, indem derartige Produkte in einem sehr engen Schuppenstrom, also mit sehr wenig Produkteabstand und dicken Wikkellagen gewickelt werden. Der obengenannte Nachteil bleibt aber bestehen im Endbereich des aufgewickelten Schuppenstromes, wo die Wickellage sukzessive dünner wird.

Dasselbe Problem zeigt sich auch beim Aufwickeln von Zweifalzen, die auf der einen Stirnseite des Wickels einen Falt, auf der anderen eine Blume aufweisen. Vor allem gefährdet sind dabei über den ganzen äusseren Umfang des Wickels diejenigen Produkteecken, die stirnseitig auf dem Wickel einen Falt aufweisen, der auf dem Wickel in radialer Richtung mehr aufträgt als der Rest des Produktes. Derartige Wickel entstehen beispielsweise, wenn Vorprodukte für Telephonbücher aufgewickelt werden.

Es ist nun die Aufgabe der Erfindung, ein Verfahren aufzuzeigen, mit dem Druckprodukte in Schuppenformation auf- und abgewickelt werden, wobei Wickel mit grossen Durchmessern und verschiedensten Druckprodukten erstellt werden können, deren Produkte auch in der äussersten Lage des Wikkels und speziell im Bereiche das Endes des aufgewickelten Schuppenstromes gegen Deformationen und Beschädigungen beim Handhaben, Transportieren und Lagern besser geschützt sind. Es ist ferner die Aufgabe der Erfindung, eine Wickelstation mit einem entsprechenden Kern-Set zur Durchführung des Verfahrens zu schaffen.

Diese Aufgabe wird gelöst durch das Verfahren und die Vorrichtung gemäss den entsprechenden unabhängigen Patentansprüchen.

Nach dem erfindungsgemässen Verfahren wird beim Aufwickeln über die äusserste Lage von Druckprodukten oder wenigstens über einen Teil dieser äussersten Lage mit Hilfe des Wickelbandes ein Stütz/Schutzelement auf den Wickel gewickelt. Das Stutz/Schutzelement ist streifenförmig und besteht aus einem wickelbaren Material, beispielsweise einer Kunststoffolie, die eine derartige Stabilität besitzt, dass sie die Druckprodukte gegen die radial wirkenden, deformierenden Kräfte gegen den Wickelkern drücken kann und dabei selbst höchstens elastisch deformiert wird. Das Stütz/Schutzelement ist dabei breiter als das Wickelband und höchstens so breit wie die aufgewickelten Druckprodukte. Seine Lange ist je nach Anwendung genügend, um den Endbereich des aufgewickelten Schuppenstromes oder die ganze äusserste Umfangfläche des Wickels abdecken zu können.

Das Stütz/Schutzelement übernimmt eine zweifache Funktion: es verhindert eine unerwünscht starke Krümmung der Druckprodukte vom Kern weg (Schnüreffekt), und es stellt einen mechanischen Schutz für die Umfangfläche des Wickels oder wenigstens für einen Teil davon dar.

Das Stütz/Schutzelement ist vorteilhafterweise Teil des Kern-Sets, das gemäss dem Stande der Technik aus dem Kern und dem Wickelband besteht und gemäss dem erfindungsgemässen Verfahren um das Stütz/Schutzelement erweitert ist. Das erfindungsgemässe Wickelverfahren läuft also beispielsweise wie folgt ab:
- Das Kern-Set (Kern mit Wickelband und Stütz/Schutzelement) wird auf eine Aufwickelstation aufgesetzt.
- Das Wickelband und das Stütz/Schutzelement werden vom Kern abgespult.
- Der Schuppenstrom wird mit dem Wickelband auf den Kern aufgewickelt. Wenn der Wickel seine Grösse erreicht hat, wird das Stütz/Schutzelement um den Wickel gewickelt und der Wickel mit dem Bandverschluss abgeschlossen.
- Der Wickel wird von der Wickelstation entfernt und zwischengelagert.
- Der Wickel wird zur Weiterverarbeitung auf einer Abwickelstation angebracht.
- Zuerst wird mit einem ersten Teil des Wickelbandes das Stütz/Schutzelement abgewickelt, dann wird weiter Wickelband und der Schuppenstrom abgewickelt.
- Das Wickelband und das Stütz/Schutzelement werden auf den Kern gewickelt und das Kern-Set von der Abwickelstation entfernt.

Das erfindungsgemässe Verfahren und die erfindungsgemässe Vorrichtung, bestehend aus Wickelstation und Wickelkern-Set, werden anhand der folgenden Figuren detailliert beschrieben. Dabei zeigen:
- **Figuren 1a und 1b**: ein nach dem erfindungsgemässen Verfahren geschützter Druckproduktewickel als Ansicht mit Blickwinkel senkrecht zur Wickelachse (Figur 1a) und als Ausschnitt senkrecht zur Wickelachse geschnitten (Figur 1b);
- **Figur 2**: ein erfindungsgemässes Wickelkern-Set;
- **Figuren 3a bis 3d**: eine beispielhafte, schematisch und nur teilweise dargestellte Ausführungsform der erfindungsgemässen Wickelstation zur Darstellung des erfindungsgemässen Aufwickelverfahrens;
- **Figuren 4a bis 4d**: wie Figuren 3a bis 3d aber für das Abwickelverfahren;
- **Figuren 5 bis 7**: beispielhafte Ausführungsformen der Teilvorrichtung zum geordneten Positionieren des Stütz/Schutzelementes;
- **Figuren 8a bis 8d**: beispielhafte Ausführungsformen des Stütz/Schutzelementes;

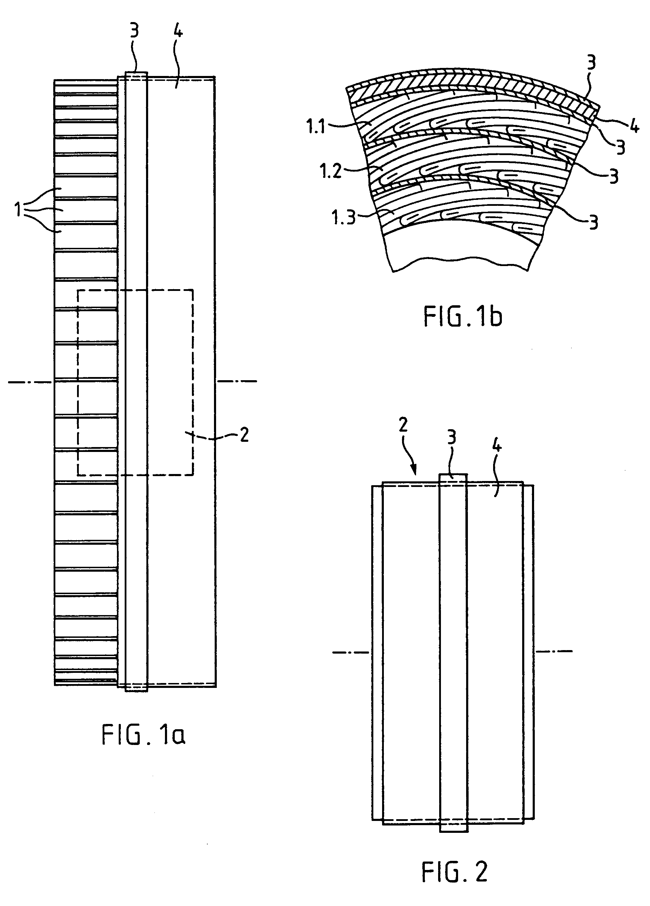

**Figuren 1a und 1b** zeigen einen Druckproduktewickel, der nach dem erfindungsgemässen Verfahren geschützt ist, als Ansicht mit Blickwinkel senkrecht zur Wickelachse (Figur 1a) und als Ausschnitt senkrecht zur Wickelachse geschnitten (Figur 1b). Der Wickel weist Druckprodukte 1 auf, die in Lagen 1.1, 1.2 etc. spiralförmig auf einem Wickelkern 2 aufgewickelt sind. Die Lagen werden durch ein Wickelband 3 auf dem Wickel gehalten. Wie aus der sehr überzeichneten Schnittdarstellung der Figur 1b zu erkennen ist, wird jede Druckproduktelage 1.1, 1.2, 1.3 etc. vom Wickelband 3 gegen den Kern 2 gehalten. Über der äussersten Lage 1.1 von Druckprodukten, speziell im Bereiche des Schuppenstrom-Endes (dargestellt) und dem diese haltenden Bandbereich ist, ebenfalls durch das Wickelband 3 auf dem Wickel gehalten, das Stütz/Schutzelement 4 auf den Wickel gewickelt.

Das Stutz/Schutzelement 4 der dargestellten, beispielhaften Ausführungsform ist schmaler als die aufgewickelten Druckprodukte 1 und erstreckt sich einseitig vom Wickelband 3. Ein derartiger, einseitiger Schutz, der den ganzen Wickel umgibt, ist vorteilhaft für Wickel von zweifach gefalteten Produkten, die auf der einen Stirnseite des Wickels einen Falt, auf der anderen die Blume aufweisen und von denen, wie bereits erwähnt, vor allem die Faltseite exponiert und schutzbedürftig ist. Das Stütz/Schutzelement kann sich aber auch beidseitig des Wickelbandes gleich erstrecken und dieselbe Breite wie die Druckprodukte aufweisen oder weniger breit sein.

**Figur 2** zeigt wiederum als Ansicht senkrecht zur Achse ein leeres Kern-Set, bestehend aus Kern 2 und darauf aufgewickeltem Wickelband 3 und Stütz/Schutzelement 4. Nur wenn das Stütz/Schutzelement 4, wenn es auf den Kern aufgewickelt ist, den Kern 1 in achsialer Richtung nicht übertagt, kann das Kern-Set problemlos gehandhabt und transportiert werden, wodurch die Breite des Stutz/Schutzelementes gegen oben begrenzt ist. Da vielfach die Druckprodukte breiter sind als der Kern (auch in Figur 1), also auch breiter als das Stütz/Schutzelement, da aber doch die Druckproduktebereiche gegen die Stirnflächen der Wickel speziell gefährdet sind, empfiehlt sich eine gegenüber dem Wickelband einseitige Anordnung des Stütz/Schutzelementes auf den Druckprodukten, wie dies im Zusammenhang mit der Figur 1 bereits aufgezeigt und beschrieben wurde.

Es zeigt sich, dass sich Stütz/Schutzelemente in Form von streiferförmigen Kunststoffolien problemlos auf die in den bereits erwähnten europäischen Publikationen EP-0477498, EP-0447908 und EP-0391453 derselben Anmelderin beschriebenen Wickelkerne aufwickeln lassen. Ein Stütz/Schutzelement hat dabei beispielsweise eine Lange von 0,2 bis 8 m und eine Breite von 0,2 bis 0,5 m. Für in der Weiterverarbeitung von Druckprodukten durchaus übliche Wickel mit einem Durchmesser von 1,8 bis 2,5 m ermöglicht ein 8 m langes Stutz/Schutzelement beispielsweise eine bis anderthalb Umschlingung des Wickels, derart, dass die äusserste Wickellage voll geschützt ist.

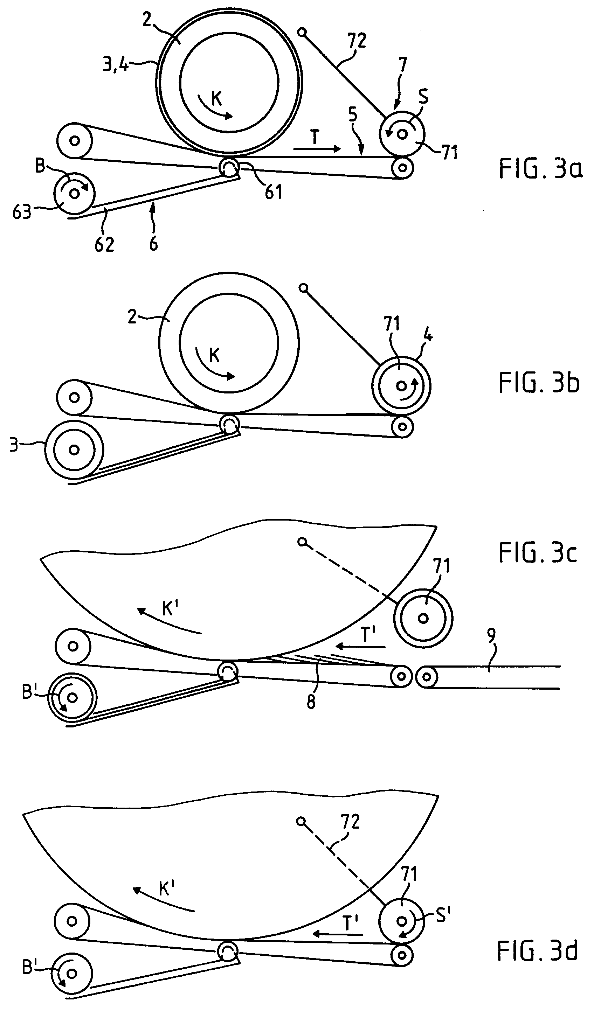

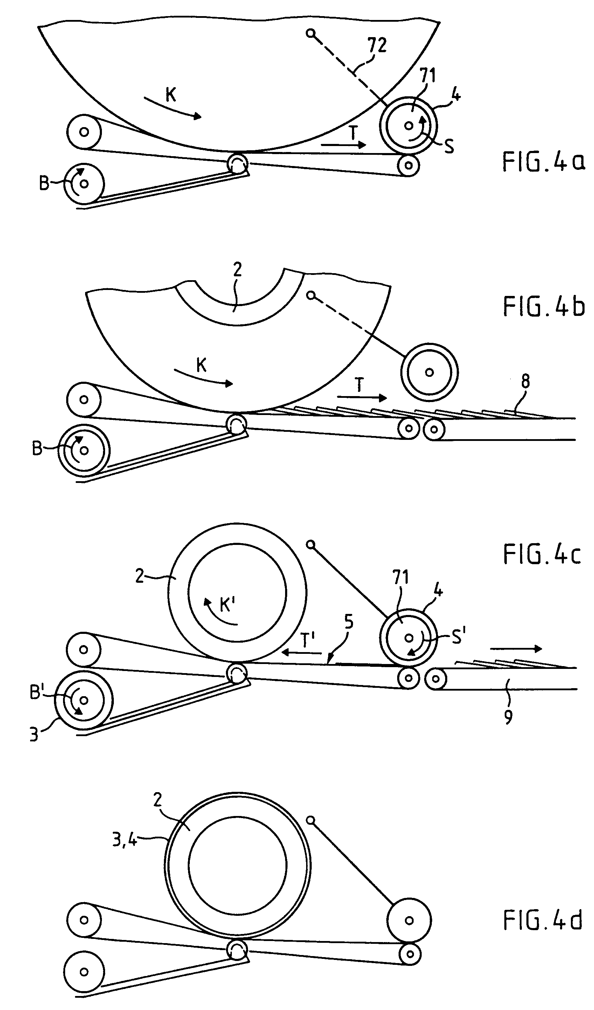

**Figuren 3a bis 3d bzw. 4a bis 4d** zeigen nun an einer beispielhaften Ausführungsform der erfindungsgemässen Wickelstation das erfindungsgemässe Verfahren, und zwar zum Aufwickeln (Erstellen) eines Wickels (Figuren 3) und zum Abwickeln (Figuren 4). Von der Wickelstation sind lediglich die für das erfindungsgemässe Verfahren relevanten Teile dargestellt. Für eine detailliertere Beschreibung sei beispielsweise auf die bereits erwähnten schweizerischen Anmeldeschriften verwiesen. Die Darstellungen zeigen den Wickelkern 2, das Wickelband 3, das Stütz/Schutzelement 4 und ein Transportelement 5, beispielsweise ein Förderband, für den Schuppenstrom. Der Wickelkern 2 ist auf der Wickelstation auf einer Hebevorrichtung (nicht dargestellt) angebracht, derart, dass er in seiner tiefsten Position unmittelbar über dem Transportelement 5 positioniert ist, in seiner höchsten Position mindestens um den Radius des fertigen Wickels über diesem Transportelement. Dazu zeigen die Figuren eine erste Teilvorrichtung 6 zum geordneten Führen und Positionieren desjenigen Bereiches des Wickelbandes 3, der nicht auf dem Kern 2 oder dem Wickel aufgerollt ist, und eine zweite Teilvorrichtung 7 zum geordneten Positionieren des Stutz/Schutzelementes 4, wenn dieses nicht auf dem Kern 2 oder auf einem Wickel aufgewickelt ist.

Die erste Teilvorrichtung 6 weist beispielsweise eine Ablösrolle 61 auf, die aus Eisen besteht und mit einem Wickelbandende zusammenarbeitet, das mit einem Magneten versehen ist. Dazu kommt eine Bandführung 62 und eine angetriebene Bandrolle 63. Weitere Ausführungsformen der ersten Teilvorrichtung 6 werden in den bereits zitierten Anmeldeschriften derselben Anmelderin beschrieben.

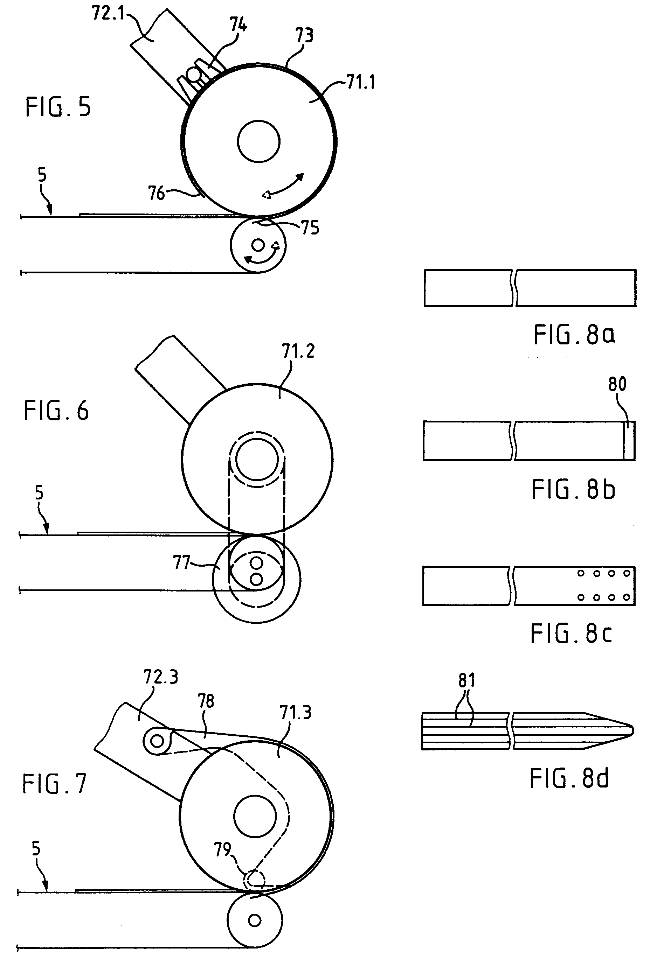

Die zweite Teilvorrichtung 7 besteht beispielsweise aus einer Stütz/Schutzelementrolle 71, die an einem Hebel 72 frei drehbar über dem Transportelement 5 angeordnet ist. Der Hebel 72 selbst ist derart an einem stationären Maschinenteil (nicht dargestellt) angeordnet, dass die Stütz/Schutzelementrolle 71 zwei Positionen einnehmen kann. Entweder liegt sie auf dem Transportelement 5 auf und wird mindestens durch ihr Gewicht oder eine zusätzliche Federkraft auf dieses gedrückt, sodass sie durch das Transportelement angetrieben wird. Oder sie ist vom Transportelement 5 beabstandet über diesem angeordnet. Ferner kann der Hebel derart angeordnet sein, dass die Stütz/Schutzelementrolle 71 senkrecht zur Papierebene der Figuren, also parallel zur Drehachse eines auf der Wickelstation aufgebrachten Kernes oder Wikkels verschiebbar ist. Weitere beispielhafte Ausführungsformen der zweiten Teilvorrichtung 7 werden noch im Zusammenhang mit den Figuren 5, 6 und 7 beschrieben.

**Figuren 3a bis 3d** zeigen den Aufwickelvorgang. Ein Kern-Set bestehend aus einem Kern 2 und darauf aufgewickeltem Wickelband 3 und Stütz/Schutzelement 4 wird auf der Wickelstation aufgesetzt und in seine tiefste Position gefahren (Figur 3a). Der Kern 2 wird in der Richtung des Pfeiles K angetrieben, die Bandrolle 63 in der Richtung des Pfeiles B und das Transportelement 5 in der Richtung des Pfeiles T. Die Stütz/Schutzelementrolle 71 ist in ihrer abgesenkten Position und liegt auf dem Transportelement 5 auf, sodass sie von diesem in der Richtung des Pfeiles S angetrieben wird. Wenn das freie Ende des Wickelbandes, das beispielsweise mit einem Magneten versehen ist, die Ablöserolle 61 passiert, wird es vom Kern 2 abgeschält und in die Bandführung 62 geführt. Durch die weitere Drehung des Kernes 2 wird das Bandende gegen die Bandrolle 63 geführt und das Band 3 schliesslich auf dieser aufgespult. Wenn der das Stütz/Schutzelement 4 überragende Teil des Wikkelbandes 3 vom Kern 2 abgewickelt ist, trifft der Anfang des Stütz/Schutzelementes 4 auf das Transportelement 5, wird von diesem gegen die Stütz/Schutzelementrolle 71 gefördert und auf diese aufgespult.

Figur 3b zeigt die Wickelstation kurz bevor das Stütz/Schutzelement 4 fertig vom Kern 2 abgewickelt ist. Wenn das Wickelband 3 genügend abgewickelt ist, werden die Antriebe gestoppt und die Stütz/Schutzelementrolle 71 in ihre über dem Transportelement erhobene Position gebracht. Soll das Stütz/Schutzelement 4, das auf dem Kern mittig aufgerollt war, auf dem Wickel asymmetrisch zum Wickelband 3 (wie im Zusammenhang mit der Figur 1 beschrieben) aufgewickelt werden, muss vor dem Aufwickeln eines Schuppenstromes die Position der Stütz/Schutzelementrolle 71 parallel zur Achse des aufgesetzten Kernes verschoben werden.

Jetzt kann ein Schuppenstrom 8 auf das, jetzt in umgekehrter Richtung T' arbeitende Transportelement 5 geleitet werden, beispielsweise über ein zugeschwenktes weiteres Transportelement 9. Sobald der Schuppenstrom 8 den Kern 2 erreicht hat, wird er mit dem Band 3 auf den Kern 2 aufgewickelt (Figur 3c). Das Wickelband 3 wird dabei ab der gebremst drehenden Bandrolle 63 abgespult und der Wickelkern 2 derart stetig angehoben, dass das Transportelement 5 immer eine Tangente an den wachsenden Wickel darstellt.

Wenn der Wickel einen genügenden Umfang hat, wird die Zufuhr gestoppt. Die Stütz/Schutzelementrolle 71 wird gegen das Transportelement abgesenkt und von diesem in der Richtung des Pfeiles S' angetrieben, derart, dass das Stütz/Schutzelement sich abwickelt und auf dem Transportelement gegen den Wickel gefördert und dort mit dem Rest des Wickelbandes auf den Wickel gewickelt wird.

Figur 3d zeigt die Wickelstation mit fertigem Wickel. Die Absenkung der Stütz/Schutzelementrolle ist derart zu steuern, dass, wenn das Stütz/Schutzelement fertig auf dem Wickel aufgewickelt ist, dies vom freien Bandende mindestens so viel überragt wird, dass dieses auf einer unteren Bandpartie befestigt werden kann und dadurch der Wickel eine handhab- und transportierbare Einheit wird.

**Figuren 4a bis 4d** zeigen den Abwickelvorgang. Dieser läuft in umgekehrter Richtung zum Aufwickelvorgang ab. In Figur 4a wird ab dem vollen Wickel zuerst der Bereich des freien Endes des Wickelbandes 3 und dann das Stütz/Schutzelement mit weiteren Bandbereichen abgewickelt. Dieser Vorgang läuft gleich ab wie das Abwickeln des Bandes 3 und des Stütz/Schutzelementes 4 vom Kern 2 (Figur 3a) mit dem Unterschied, dass jetzt das Stütz/Schutzelement 4 näher am freien Bandende aufgewickelt ist. Sofort nach dem Stütz/Schutzelement 4 wird der Schuppenstrom 8 abgewickelt, wofür die Stütz/Schutzelementrolle 71 weggehoben und besipielsweise das weitere Transportelement 9 zugeschwenkt wird (Figur 4b). War das Stütz/Schutzelement 4 einseitig vom Wickelband 3 auf dem Wickel aufgewickelt, wird die achsiale Position der Stütz/Schutzelementrolle 71 für das Aufwickeln des Stütz/Schutzelementes 4 auf dem Kern ajustiert. Sobald alle Druckprodukte abgewickelt sind, werden durch Absenken der Stütz/Schutzelementrolle 71 und Antrieb von Kern 2 bzw. Transportelement 5 in der Richtung K' bzw. T' Stütz/Schutzelement 4 und Wickelband 3 wieder auf den Kern gewickelt (Figur 4c). Figur 4d zeigt das zum Entfernen von der Station bereite Kern-Set, bestehend aus Kern 2, und darauf aufgewickeltem Wickelband 3 und Stütz/Schutzelement 4.

Das auf der Stütz/Schutzelementrolle aufgewickelte Stütz/Schutzelement muss auf dieser derart festgehalten werden, dass es sich während der Bewegungen dieser Rolle nicht verschiebt, abwickelt oder lockert. Dies kann für eine Ausführungsform mit einer einfachen Rolle, wie in den Figuren 3 und 4 dargestellt, realisiert werden mit einem Stütz/Schutzelement aus einem Material, das an sich selbst haftet. Es kann aber auch realisiert werden mit Teilvorrichtungen, wie sie beispielsweise in den Figuren 5, 6 und 7 dargestellt sind.

**Figur 5** zeigt eine beispielhafte Ausführungsform der Teilvorrichtung zum geordneten Positionieren des Stütz/Schutzelementes. Diese weist eine frei drehbar an einem Schwenkhebel 72.1 angeordnete Stütz/Schutzelementrolle 71.1 auf. Um die Stütz/Schutzelementrolle 71.1 schmiegt sich wenigstens teilweise eine federnde Spange 73, die die Stütz/Schutzelementrolle 71.1 fast ganz umschliesst und die derart angeordnet ist, dass die Stütz/Schutzelementrolle dort frei ist, wo sie durch das Transportelement 5 angetrieben wird. Die Spange 73 ist in einer Führung 74 derart am Schwenkhebel 72.1 angeordnet, dass sie sich an den durch das aufgewickelte Stütz/Schutzelement vergrössernden Durchmesser der Stütz/Schutzelementrolle angleichen kann. Gleichzeitig übernimmt die Spange 73 mit der gegen das Transportelement gerichteten Kante 75 die Funktion, das Stütz/Schutzelement beim Aufwickeln an und um die Stütz/Schutzelementrolle zu führen und es gegen diese zu pressen. Die Gegenkante 76 kann die Funktion, das Stütz/Schutzelement zum Abwickeln von der Rolle 71.1 abzuschälen, übernehmen.

**Figur 6** zeigt eine weitere Ausführungsform derselben Teilvorrichtung wie Figur 5. Sie weist wiederum eine Stütz/Schutzelementrolle 71.2 zum Aufwikkeln des Stütz/Schutzelementes auf und eine mit dieser verbundene Hilfsrolle 77. Beide Rollen 71.2 und 77 werden in der nicht angehobenen Position durch das Transportelement 5 angetrieben. Ein Wickelband ist mit einem Ende an der Stütz/Schutzelementrolle 71.2, mit dem anderen Ende an der Hilfsrolle 77 befestigt und ist, wenn kein Stütz/Schutzelement aufgewickelt ist, auf der Hilfsrolle 77 aufgespult. Wird ein Stütz/Schutzelement auf die Stütz/Schutzelementrolle 71.2 aufgewickelt, wird das Band von der Hilfsrolle 77 mitgewickelt und hält das Stütz/Schutzelement auf der Stütz/Schutzelementrolle 71.2 fest, genau wie der Schuppenstrom durch ein Wickelband auf dem Wickelkern festgehalten wird. Wenn das Stütz/Schutzelement wieder abgewickelt wird, wird das Band auf die Hilfsrolle 77 aufgewickelt.

**Figur 7** zeigt eine weitere Ausführungsform derselben Teilvorrichtung wie die Figuren 5 und 6. Sie weist wiederum eine Stütz/Schutzelementrolle 71.3 auf, die frei drehbar an einem Schwerkhebel 72.3 angeordnet ist. Ebenfalls an diesem Schwenkhebel 72.3 ist schwenkbar ein gekrümmter Bügel 78 angeordnet, der sich einseitig um die Stütz/Schutzelementrolle 71.3 krümmt und im Bereiche von ihrem tiefsten Punkt ein Stützröllchen 79 trägt. Befindet sich die schutzelementrolle 73.3 in ihrer abgesenkten Stellung, ist der Bügel 78 durch das Stützröllchen auf dem Transportelement 5 aufgestützt und dadurch leicht von der Stütz/Schutzelementrolle 71.3 abgehoben (wie in der Figur dargestellt). Befindet sich die Stütz/Schutzelementrolle 71.3 in ihrer abgehobenen Stellung, ist der Bügel 78 nicht aufgestützt und liegt dadurch wenigstens oben auf der Stütz/Schutzelementrolle 71.3 auf und presst dadurch das aufgewickelte Stütz/Schutzelement gegen die Stütz/Schutzelementrolle.

Alle gezeigten Ausführungsformen der Teilvorrichtung 7 weisen Stütz/Schutzelementrollen auf, die durch das Transportelement angetrieben werden und dafür auf dieses abgesenkt werden. Es ist aber durchaus auch vorstellbar, dass die Stütz/Schutzelementrolle einen eigenen steuerbaren Antrieb besitzt.

Die Teilvorrichtung 7 zum geordneten Positionieren des Stütz/Schutzelementes kann auch anstelle der Stütz/Schutzelementrolle ein anderes Positioniermittel für das Stütz/Schutzelement aufweisen. Vorstellbar ist ein Kanal, in dem das Stütz/Schutzelement ausgestreckt oder schlangenlinienförmig gefaltet positioniert wird, oder ein beispielsweise magnetischer Hängearm, der gegen das Transportelement abgesenkt wird, um ein mit einem Stahlstreifen versehenes Ende eines Stütz/Schutzelementes zu erfassen, und dann soweit angehoben wird, dass das Stütz/Schutzelement frei daran hängt.

**Figuren 8a bis 8d** zeigen verschiedene Ausführungsformen von Stütz/Schutzelementen. Ein Stütz/Schutzelement kann ein einfaches, streifenförmiges Stück aus Kunststoffolie oder ähnlichem Material sein (Figur 8a). Um ein derartiges Stütz/Schutzelement auf eine Stütz/Schutzelementrolle aufwickeln zu können, muss die Rolle mit Mitteln ausgerüstet sein, mit denen das Ende des Stütz/Schutzelements gegen die Rolle geführt wird, beispielsweise eine führende Kante 75 (Figur 5). Das Ende des Stütz/Schutzelementes kann aber auch für eine Interaktion mit der Stütz/Schutzelementrolle speziell ausgerüstet sein. Beispielsweise kann dieses Endstück einen Magneten 80 aufweisen, der mit einer wenigstens teilweise aus Eisen bestehenden Rolle zusammenarbeitet (Figur 8b) oder es kann gelocht sein und mit einer mit entsprechenden Mitnehmern ausgerüsteten Rolle zusammenarbeiten (Figur 8c). Das gesamte Stütz/Schutzelement kann auch Stahl- oder Magnetstreifen 81 enthalten und mit einer mit Mitnehmermagneten ausgerüsteten Rolle zusammenarbeiten.

In allen bis anhin beschriebenen Ausführungsformen können dieselben Stütz/Schutzelemente immer wieder für neue Wickel verwendet werden. Sie bilden einen Teil des Kern-Sets und werden jedesmal, wenn der Kern für einen Wickel gebraucht wird, ebenfalls gebraucht. Auf diese Weise ist das Verfahren sehr ökonomisch. Es ist aber durchaus auch vorstellbar, dass das Stütz/Schutzelement ein Einwegstück ist und dass die Stütz/Schutzelementrolle als Vorratsrolle ausgestaltet ist, auf der ein Vorrat des entsprechenden Materials, beispielsweise starkes Papier, in der richtigen Breite aufgerollt ist. Auf jeden Wickel wird dann ein Stück dieses Materials aufgewickelt und in der richtigen Lange von einer entsprechend gesteuerten Schneidevorrichtung abgeschnitten. Beim Abwickeln des Wickels wird das Stütz/Schutzelement dann verworfen.

## Patentansprüche

1. Verfahren zum Auf- bzw. Abwickeln von Druckprodukten in Form eines Schuppenstromes (8) mit Hilfe einer Wickelstation und eines Wickelkern-Sets mit einem Wickelkern (2) und einem Wickelband (3), welches Wickelband (3) mit einem Ende am Wickelkern (2) befestigt und auf den Wickelkern aufwickelbar ist, wobei zum Aufwickeln des Schuppenstromes (8) zuerst das Wickelband (3) ab dem Wickelkern (2) auf eine Bandrolle (63) gewickelt, dann mit dem Schuppenstrom (8) in gespanntem Zustand wieder auf den Wickelkern (2) gewickelt und um die äusserste Wickellage mit sich selbst verbunden wird, derart, dass das Wickelband (3) die Druckprodukte jeder Wickellage gegen den Wickelkern (2) schnürt, und wobei zum Abwickeln das Wickelband (3) mit dem Schuppenstrom (8) abgewickelt, auf die Bandrolle (63) gewickelt und dann wieder auf den Wickelkern (2) gewickelt wird, **dadurch gekennzeichnet**, dass beim Aufwickeln des Schuppenstromes (8) zur Verhinderung einer unerwünschten, durch den Schnüreffekt des Wickelbandes (3) bedingten Krümmung von Druckprodukten der äussersten Wickellage über diese äusserste Wickellage mindestens im Endbereich des aufgewikkelten Schuppenstromes (8) bezüglich Wickelband und Druckprodukten symmetrisch oder asymmetrisch in demselben Wickelvorgang mit Hilfe des Wickelbandes (3) ein streifenförmiges, wickelbares Stütz/Schutzelement (4) mit einer Länge, die kürzer ist als das Wikkelband, und mit einer zur Verhinderung einer unerwünschten Krümmung genügenden Stabilität gewickelt wird und dass beim Abwickeln Wickelband (3), Stütz/Schutzelement (4) und Schuppenstrom (8) im gleichen Wickelvorgang abgewickelt werden.

2. Verfahren nach Anspruch 1, **dadurch gekennzeichnet,** dass beim Abwickeln des Schuppenstromes (8) das Stütz/Schutzelement (4) in eine auf eine Stütz/Schutzelementerolle (71.3) aufgerollte, an einem Hängearm hängende oder in einem Kanal ausgestreckte oder gefaltete Position gebracht wird und dass beim Aufwickeln das Stütz/Schutzelement aus dieser Position in den Aufwickelvorgang zugeführt wird.

3. Verfahren nach Anspruch 2, **dadurch gekennzeichnet**, dass nach dem Abwickeln des Schuppenstromes das Stütz/Schutzelement (4) mit dem Wickelband (3) auf dem leeren Wickelkern (2) aufgewickelt wird und dass vor dem Aufwickeln des Schuppenstromes (8) zuerst Wickelband (3) und Stütz/Schutzelement (4) vom Wickelkern (2) abgewickelt werden.

4. Verfahren nach Anspruch 2, **dadurch gekennzeichnet**, dass das Stütz/Schutzelement auf eine Stütz/Schutzelementrolle (71) aufgerollt wird.

5. Verfahren nach Anspruch 2, **dadurch gekennzeichnet**, dass das Stütz/Schutzelement (4) in einem Kanal ausgestreckt oder schlangenlinienförmig gefaltet oder an einem Hebearm aufgehängt wird.

6. Verfahren nach Anspruch 1, **dadurch gekennzeichnet**, dass das Stütz/Schutzelement (4) beim Aufwickeln des Schuppenstromes (8) von einer Vorratsrolle abgewickelt wird und zu einer vorgegebenen Länge geschnitten wird und dass das Stütz/Schutzelement (4) beim Abwikkeln des Schuppenstromes (8) verworfen wird.

7. Wickelstation mit Wickelkern-Set zur Durchführung des Verfahrens nach einem der Ansprüche 2 bis 5, wobei die Wickelstation ein Transportmittel (5) zum Zu- bzw. Wegtransport eines Schuppenstromes (8) von Druckprodukten und eine Bandrolle (63) aufweist und wobei das Wickelkern-Set einen Wickelkern (2) und ein Wickelband aufweist, welches Wickelband an einem Ende am Wickelkern (2) befestigt und auf den Wickelkern aufwickelbar ist, **dadurch gekennzeichnet**, dass die Wickelstation Mittel (7) zur aufgerollten, hängenden, ausgestreckten oder gefalteten Positionierung des Stütz/Schutzelements (4) beim Abwickeln des Schuppenstromes (8) vom Wickelkern (2) und zur Zuführung des positionierten Stütz/Schutzelements (4) beim Aufwickeln des Schuppenstromes (8) aufweist und dass das Wickekern-Set, wenn es nicht in einem Wickel integriert ist, zusätzlich ein wickelbares, streifenförmiges Stütz/Schutzelement (4) mit einer Länge, die kleiner ist als die Länge des Wickelbandes aufweist, und mit einer zur Verhinderung einer unerwünschten Krümmung von Druckprodukten in der äussersten Wickellage genügenden Stabilität, welches Stütz/Schutzelement (4) mit dem Wickelband (3) auf dem Kern (2) aufgewickelt ist.

8. Wickelstation nach Anspruch 7, **dadurch gekennzeichnet**, dass die Mittel (7) zur Positionierung und Zuführung des Stütz/Schutzelementes (4) für ein asymmetrisches Aufwickeln des Stütz/Schutzelements auf dem Wickel und für ein symmetrisches Aufwickeln des Stütz/Schutzelements auf dem Wickelkern (2) in Richtung der Wickelachse verschiebbar sind.

9. Wickelstation nach einem der Ansprüche 7 oder 8, **dadurch gekennzeichnet**, dass die Mittel (7) zur Positionierung und Zuführung einen Kanal zur ausgestreckten oder gefalteten Positionierung des Stütz/Schutzelementes (4) oder einen Hebearm zur hängenden Positionierung des Stütz/Schutzelements (4) aufweisen.

10. Wickelstation nach einem der Ansprüche 7 oder 8, **dadurch gekennzeichnet**, dass die Mittel (7) zur Positionierung und Zuführung eine Stütz/Schutzelementrolle (71) zur aufgerollten Positionierung des Stütz/Schutzelementes (4) aufweist.

11. Wickelstation nach Anspruch 10, **dadurch gekennzeichnet**, dass die Stütz/Schutzelementrolle (71) frei drehbar derart angetrieben verschiebbar an der Wickelstation angebracht ist, dass sie auf dem Transportmittel (5) aufliegt und von diesem angetrieben ist oder von diesem abgehoben ist.

12. Wickelstation nach Anspruch 10, **dadurch gekennzeichnet**, dass die Stütz/Schutzelementrolle (71) vom Transportmittel (5) beabstandet und gesteuert angetrieben ist.

13. Wickelstation nach einem der Ansprüche 10 bis 12, **dadurch gekennzeichnet**, dass die Stütz/Schutzelementrolle (71.1) derart von einer elastischen Spange (73) umgriffen ist und die Spange (73) mit einer Führung (74) derart an der Station angeordnet ist, dass die Position der Spange relativ zur Stütz/Schutzelementrolle (71.1) begrenzt variabel ist.

14. Wickelstation nach einem der Ansprüche 10 bis 12, **dadurch gekennzeichnet**, dass zusätzlich zur Stütz/Schutzelementrolle (71.2), eine Hilfsrolle (77) und ein weiteres Wickelband vorgesehen ist, wobei das eine Ende des weiteren Wickelbandes mit der Stütz/Schutzelementrolle (71.2) und das andere Ende des weiteren Wickelbandes mit der Hilfsrolle (77) fest verbunden ist.

15. Wickelstation nach einem der Ansprüche 10 oder 11, **dadurch gekennzeichnet**, dass wenigstens teilweise um die Stütz/Schutzelementrolle (71.3) ein gekrümmter Bügel (78) relativ zur Stütz/Schutzelementrolle derart schwenkbar angeordnet ist, dass er in der auf das Transportelement (5) abgesenkten Position der Stütz/Schutzelementrolle (71.3) auf einem Stützröllchen (79) auf dem Transportmittel (5) abgestützt ist, in der angehobenen Position auf der Stütz/Schutzelementrolle (71.3) aufliegt.

16. Wickelkern-Set für eine Wickelstation gemäss einem der Ansprüche 7 bis 15 mit einem Wickelkern (2) und einem Wickelband (3), das mit einem Ende am Wickelkern (2) befestigt und auf den Wickelkern aufwickelbar ist, **dadurch gekennzeichnet**, dass das Wickelkern-Set zusätzlich ein wickelbares, streifenförmiges Stütz/Schutzelement (4) mit einer Länge, die kleiner ist als die Länge des Wickelbandes aufweist, und mit einer zur Verhinderung einer unerwünschten Krümmung von Druckprodukten in der äussersten Wickellage genügenden Stabilität, welches Stütz/Schutzelement (4) mit dem Wickelband (3) auf dem Kern (2) aufgewickelt ist.

17. Wickelkern-Set nach Anspruch 16, **dadurch gekennzeichnet**, dass das Stütz/Schutzelement (4) höchstens so breit ist wie die Umfangsfläche des Kernes.

18. Wickelkern-Set nach einem der Ansprüche 16 oder 17, **dadurch gekennzeichnet**, dass das Stütz/Schutzelement (4) aus Kunststoffolie besteht.

19. Wickelkern-Set nach einem der Ansprüche 16 bis 18, **dadurch gekennzeichnet**, dass das Stütz/Schutzelement (4) an seinem einen Ende mit einem Magneten (80) versehen ist.

20. Wickelkern-Set nach einem der Ansprüche 16 bis 18, **dadurch gekennzeichnet**, dass das Stütz/Schutzelement (4) an seinem einen Ende ein Lochmuster aufweist.

21. Wickelkern-Set nach einem der Ansprüche 16 bis 18, **dadurch gekennzeichnet**, dass das Stütz/Schutzelement (4) über seine ganze Länge mit Stahl- oder Magnetstreifen (81) versehen ist.

## Claims

1. Method for winding and/or unwinding printed products in the form of a scale flow (8) with the aid of a winding station and a winding core set having a winding core (2) and a winding tape (3), the latter being fixed by one end to the winding core (2) and can be wound onto the latter and for winding the scale flow (8) firstly the winding tape (3) is wound from the winding core (2) onto a tape roller (63), then being wound in the taut state with the scale flow (8) back onto the winding core (2) and connected to itself round the outermost roll layer in such a way that the winding tape (3) constricts the printed products of each roll layer against the winding core (2) and in which for unwinding purposes the winding tape (3) is unwound with the scale flow (8), wound onto the tape roller (63) and then wound again onto the winding core (2), characterized in that on winding the scale flow (8) for preventing an undesired curvature of the printed products of the outermost roll layer caused by the constricting effect of the winding tape (3), over said outermost roll layer, at least in the end region of the wound scale flow (8), symmetrically or asymmetrically with respect to the winding tape and printed products and in the same winding process with the aid of the winding tape (3) is wound a strip-like, windable support/protection element (40 with a length shorter than the winding tape and having a stability adequate for preventing an undesired curvature and that on unwinding the winding tape (3), support/protection element (4) and scale flow (8) are unwound in the same winding process.

2. Method according to claim 1, characterized in that on unwinding the scale flow (8), the support/protection element (4) is brought into a position rolled onto a support/protection element roller (71.3), hanging on a hanging arm or stretched out or folded in a channel and that on winding the support/protection element is supplied from this position to the winding process.

3. Method according to claim 2, characterized in that after unwinding the scale flow, the support/protection element (4) with the winding tape (3) is wound onto the empty winding core (2) and that prior to the winding of the scale flow (8) firstly the winding tape (3) and support/protection element (4) are unwound from the winding core (2).

4. Method according to claim 2, characterized an that the support/protection element is wound onto a support/protection element roller (71).

5. Method according to claim 2, characterized in that the support/protection element (4) is stretched out or folded in undulated manner in a channel or hung on a lifting arm.

6. Method according to claim 1, characterized in that, on winding the scale flow (8), the support/protection element (4) is unwound from a supply roller and cut to a predetermined length and that the support/protection element (4) is discarded on unwinding the scale flow (8).

7. Winding station with winding core set for performing the method according to one of the claims 2 to 5, in which the winding station has a conveying means (5) for conveying in and away a scale flow (8) of printed products and a tape roller (63) and in which the winding core set has a winding core (2) and a winding tape, the latter being fixed by one end to the winding core (2) and can be wound onto the latter, characterized in that the winding station has means (7) for the rolled, hanging, stretched out or folded positioning of the support/protection element (4) on unwinding the scale flow (8) from the winding core (2) and for supplying the positioned support/protection element (4) during the winding of the scale flow (8) and that the winding core set, if it is not integrated into a roll, additionally has a windable, strip-like support/protection element (4) with a length smaller than the length of the winding tape and with an adequate stability to prevent an undesired curvature of the printed products in the outermost roll layer, said support/protection element (4) being wound with the winding tape (3) onto the core (2).

8. Winding station according to claim 7, characterized in that the means (7) for positioning and supplying the support/protection element (4) for an asymmetrical winding of the support/protection element on the roll and for a symmetrical winding of the support/protection element on the winding core (2) can be moved in the direction of the roll axis.

9. Winding station according to one of the claims 7 or 8, characterized in that the positioning and supply means (7) have a channel for the stretched out or folded positioning of the support/protection element (4) or a lifting arm for the hanging positioning of the support/protection element (4).

10. Winding station according to one of the claims 7 or 8, characterized in that the positioning and supply means (7) have a support/protection element roller (71) for the rolled positioning of the support/protection element (4).

11. Winding station according to claim 10, characterized in that the support/protection element roller (71) is freely rotatable and fitted in driven displaceable manner to the winding station in such a way that it rests on the conveying means (5) and is driven by or raised from the latter.

12. Winding station according to claim 10, characterized in that the support/protection element roller (71) is spaced and driven in controlled manner by the conveying means (5).

13. Winding station according to one of the claims 10 to 12, characterized in that an elastic clip (73) engages around the support/protection element roller (71.1) and the clip (73) with a guide (74) is so positioned at the station that the position of the clip relative to the support/protection element roller (71.1) can be varied to a limited extent.

14. Winding station according to one of the claims 10 to 12, characterized in that in addition to the support/protection element roller (71.2) an auxiliary roller (77) and a further winding tape are provided, one end of the further winding tape being firmly connected to the support/protection element roller (71.2) and the other end of the further winding tape is firmly connected to the auxiliary roller (77).

15. Winding station according to one of the claims 10 or 11, characterized in that a curved fastening (78) is at least partly pivotably arranged round and relative to the support/protection element roller (71.3) that in the position of the support/protection element roller (71.3) lowered onto the conveying element (5) it is supported on the conveying means (5) by a support roller (79) and in the raised position rests on the support/protection element roller (71.3).

16. Winding core set for a winding station according to one of the claims 7 to 15 with a winding core (2) and a winding tape (3) fixed by one end to the winding core (2) and which can be wound onto the latter, characterized in that the winding core set additionally has a windable, strip-like support/protection element (4) with a length smaller than the winding tape length and with a stability adequate for preventing an undesired curvature of printed products in the outermost roll layer, said support/protection element (4) being wound with the winding tape (3) onto the core (2).

17. Winding core set according to claim 16, characterized in that the support/protection element (4) is at the most as wide as the core circumferential surface.

18. Winding core set according to one of the claims 16 or 17, characterized in that the support/protection element (4) is made from plastic film.

19. Winding core set according to one of the claims 16 to 18, characterized in that one end of the support/protection element (4) is provided with a magnet (80).

20. Winding core set according to one of the claims 16 to 18, characterized in that one end of the support/protection element (4) has a perforated pattern.

21. Winding core set according to one of the claims 16 to 18, characterized in that the support/protection element (4) is provided over its entire length with steel or magnetic strips (81).

## Revendications

1. Procédé d'enroulement et de déroulement de produits imprimés sous la forme d'écailles imbriquées (8) à l'aide d'un poste d'enroulement et d'un ensemble de moyeu d'enroulement avec un moyeu d'enroulement (2) et une bande d'enroulement (3), laquelle bande d'enroulement (3) est fixée par une extrémité à un moyeu d'enroulement (2) et peut être enroulée sur le moyeu d'enroulement, la bande d'enroulement (3)étant d'abord enroulée sur un rouleau de bande (63) à partir du moyeu d'enroulement (2) pour l'enroulement des écailles imbriquées (8), puis enroulée à nouveau avec les écailles imbriquées (8) à l'état tendu sur le moyeu d'enroulement (2) et attachée à elle-même autour de la couche d'enroulement extérieure, de telle sorte que la bande d'enroulement (3) serre les produits imprimés de chaque couche d'enroulement contre le moyeu d'enroulement (2), et la bande d'enroulement (3) étant déroulée avec les écailles imbriquées (8) pour le déroulement, enroulée sur le rouleau de bande (63) puis à nouveau enroulée sur le moyeu d'enroulement (2), caractérisé en ce que lors de l'enroulement des écailles imbriquées (8), en vue d'empêcher un pliage des produits imprimés de la couche d'enroulement extérieure du fait de l'effet de serrage de la bande d'enroulement (3), un élément d'appui et de protection (4) en forme de bande d'une longueur inférieure à celle de la bande d'enroulement et doté d'une stabilité suffisante pour empêcher un pliage intempestif est enroulé par-dessus la couche d'enroulement extérieure au moins dans la zone d'extrémité des écailles imbriquées (8) enroulées, d'une manière symétrique ou asymétrique par rapport à la bande d'enroulement et aux produits imprimées, à l'aide de la bande d'enroulement (3), et en ce que lors du déroulement la bande d'enroulement (3), l'élément d'appui et de protection (4) et les écailles imbriquées (8) sont déroulés dans la même opération.

2. Procédé selon la revendication 1, caractérisé en ce que lors du déroulement des écailles imbriquées (8), l'élément d'appui et de protection (4) est amené dans une position enroulée sur un rouleau pour élément d'appui et de protection (71.3), suspendue à un bras de suspension ou étendue ou pliée dans un canal et que lors de l'enroulement, l'élément d'appui et de protection est amené à l'opération d'enroulement à partir de cette position.

3. Procédé selon la revendication 2, caractérisé en ce qu'après le déroulement des écailles imbriquées, l'élément d'appui et de protection (4) est enroulé avec la bande d'enroulement (3) sur le moyeu d'enroulement (2) vide et en ce qu'avant l'enroulement des écailles imbriquées (8), la bande d'enroulement (3) et l'élément d'appui et de protection (4) sont d'abord déroulés du moyeu d'enroulement (2).

4. Procédé selon la revendication 2, caractérisé en ce que l'élément d'appui et de protection est enroulé sur un rouleau pour l'élément d'appui et de protection (71).

5. Procédé selon la revendication 2, caractérisé en ce que l'élément d'appui et de protection (4) est étendu ou replié en zigzag dans un canal ou suspendu sur un bras de levage.

6. Procédé selon la revendication 1, caractérisé en ce que l'élément d'appui et de protection (4) est déroulé à partir d'un rouleau de réserve lors de l'enroulement des écailles imbriquées (8) et coupé à une longueur prédéterminée et en ce que l'élément d'appui et de protection (4) est rejeté lors du déroulement des écailles imbriquées (8).

7. Poste d'enroulement avec un ensemble de moyeu d'enroulement pour la mise en oeuvre du procédé selon l'une des revendications 2 à 5, le poste d'enroulement comportant un moyen de transport (5) pour amener et évacuer un courant de produits imprimés en écailles imbriquées (8) et un rouleau de bande (63), et l'ensemble de moyeu d'enroulement comportant un moyeu d'enroulement (2) et une bande d'enroulement, laquelle bande d'enroulement est fixée par une extrémité au moyeu d'enroulement (2) et peut être enroulée sur le moyeu d'enroulement, caractérisé en ce que le poste d'enroulement présente un moyen (7) pour le positionnement enroulé, suspendu, étendu ou plié de l'élément d'appui et de protection (4) lors du déroulement des écailles imbriquées (8) à partir du moyeu d'enroulement (2) et pour l'acheminement de l'élément d'appui et de protection (4) positionné lors de l'enroulement des écailles imbriquées (8), et en ce que l'ensemble de moyeu d'enroulement, lorsqu'il n'est pas intégré dans un rouleau, présente en outre un élément d'appui et de protection (4) en forme de bande pouvant être enroulé, d'une longueur inférieure à la longueur de la bande d'enroulement, et doté d'une stabilité suffisante pour empêcher un pliage intempestif de produits imprimés dans la couche d'enroulement extérieure, lequel élément d'appui et de protection (4) est enroulé sur le moyeu (2) avec la bande d'enroulement (3).

8. Poste d'enroulement selon la revendication 7, caractérisé en ce que le moyen (7) de positionnement et d'acheminement de l'élément d'appui et de protection (4) peut être déplacé dans le sens de l'axe d'enroulement en vue d'un enroulement asymétrique de l'élément d'appui et de protection sur le rouleau et d'un enroulement symétrique de l'élément d'appui et de protection sur le moyeu d'enroulement (2).

9. Poste d'enroulement selon l'une quelconque des revendications 7 ou 8, caractérisé en ce que le moyen (7) de positionnement et d'acheminement présente un canal pour le positionnement étendu ou replié de l'élément d'appui et de protection (4) ou un bras de levage pour le positionnement suspendu de l'élément d'appui et de protection (4).

10. Poste d'enroulement selon l'une quelconque des revendications 7 ou 8, caractérisé en ce que le moyen (7) de positionnement et d'acheminement présente un rouleau (71) pour l'élément d'appui et de protection en vue du positionnement enroulé de l'élément d'appui et de protection (4).

11. Poste d'enroulement selon la revendication 10, caractérisé en ce que le rouleau (71) pour l'élément d'appui et de protection est disposé avec possibilité de rotation libre sur le poste d'enroulement avec un entraînement en translation tel qu'il repose sur le moyen de transport (5) et qu'il est entraîné ou soulevé par celui-ci.

12. Poste d'enroulement selon la revendication 10, caractérisé en ce que le rouleau (71) pour l'élément d'appui et de protection est entraîné par le moyen de transport (5) avec un espacement et de manière dirigée.

13. Poste d'enroulement selon l'une des revendications 10 à 12, caractérisé en ce que le rouleau (71.1) pour l'élément d'appui et de protection est entouré par une agrafe élastique (73) et l'agrafe (73) est disposée sur le poste avec un guidage (74) de telle sorte que la position de l'agrafe par rapport au rouleau (71.1) pour l'élément d'appui et de protection puisse varier de façon limitée.

14. Poste d'enroulement selon l'une des revendications 10 à 12, caractérisé en ce qu'outre le rouleau (71.2) pour l'élément d'appui et de protection, il est prévu un rouleau auxiliaire (77) et une autre bande d'enroulement, une extrémité de l'autre bande d'enroulement étant reliée au rouleau (71.2) pour l'élément d'appui et de protection et l'autre extrémité de l'autre bande d'enroulement au rouleau auxiliaire (77).

15. Poste d'enroulement selon l'une quelconque des revendications 10 ou 11, caractérisé en ce qu'un étrier recourbé (78) est disposé au moins partiellement autour du rouleau (71.3) pour l'élément d'appui et de protection avec possibilité de pivotement par rapport au rouleau pour l'élément d'appui et de protection de telle sorte qu'il s'appuie dans la position abaissée sur l'élément de transport (5) du rouleau (71.3) pour l'élément d'appui et de protection sur un galet d'appui (79) de l'élément de transport (5), et repose dans la position relevée sur le rouleau (71.3) pour l'élément d'appui et de protection.

16. Ensemble de moyeu d'enroulement pour un poste d'enroulement selon l'une des revendications 7 à 15 avec un moyeu d'enroulement (2) et une bande d'enroulement (3), qui est fixée par une extrémité au moyeu d'enroulement (2) et peut être enroulée sur le moyeu d'enroulement, caractérisé en ce que l'ensemble de moyeu d'enroulement présente en outre un élément d'appui et de protection (4) enroulable en forme de bande d'une longueur inférieure à celle de la bande d'enroulement et doté d'une stabilité suffisante pour empêcher un pliage intempestif des produits imprimés de la couche d'enroulement extérieure, lequel élément d'appui et de protection (4) est enroulé avec la bande d'enroulement (3) sur le moyeu (2).

17. Ensemble de moyeu selon la revendication 16, caractérisé en ce que l'élément d'appui et de protection (4) est au maximum aussi large que la surface périphérique du moyeu.

18. Ensemble de moyeu selon l'une quelconque des revendications 16 ou 17, caractérisé en ce que l'élément d'appui et de protection (4) se compose de feuille de plastique.

19. Ensemble de moyeu selon l'une des revendications 16 à 18, caractérisé en ce que l'élément d'appui et de protection (4) est pourvu à l'une de ses extrémités d'un aimant (80).

20. Ensemble de moyeu selon l'une des revendications 16 à 18, caractérisé en ce que l'élément d'appui et de protection (4) présente à l'une de ses extrémités un motif de trous.

21. Ensemble de moyeu selon l'une des revendications 16 à 18, caractérisé en ce que l'élément d'appui et de protection (4) est pourvu sur toute sa longueur de bandes d'acier ou de bandes aimantées (81).
